Europäisches Patentamt

European Patent Office

Office européen des brevets

(19)

(11) Numéro de publication: **0 128 092**
**B1**

(12) **FASCICULE DE BREVET EUROPEEN**

(45) Date de publication du fascicule du brevet: **18.05.88**

(51) Int. Cl.⁴: **G 21 B 1/00**

(21) Numéro de dépôt: **84401118.9**

(22) Date de dépôt: **30.05.84**

(54) Dispositif de couverture de réacteur à fusion nucléaire utilisant la réaction deutérium tritium, à matériau tritigène solide.

(30) Priorité: **03.06.83 FR 8309258**

(43) Date de publication de la demande:
**12.12.84 Bulletin 84/50**

(45) Mention de la délivrance du brevet:
**18.05.88 Bulletin 88/20**

(84) Etats contractants désignés:
**DE GB IT**

(56) Documents cités:
**FR-A-1 164 280**

**ATOMKERNENERGIE, vol. 32, no. 3, 1978, Munich (DE)M.M.H. RAGHEB et al.:"Three-dimensional cell calculations for a fusion reactor gas-cooled solid blanket", pages 159-168**

**PROCEEDINGS OF THE 9TH SYMPOSIUM ON ENGINEERING PROBLEMS OF FUSION RESEARCH, vol. 1, Chicago, Ill., 26-29 octobre 1981, New York (US) G.D. MORGAN et al.:"Conceptual design of tritium breeding blanket for INTOR", pages 732-735**

(73) Titulaire: **FRAMATOME**
**Tour Fiat 1 place de la Coupole**
**F-92400 Courbevoie (FR)**

(72) Inventeur: **Chevereau, Gérard**
**84, Avenue Thiers**
**F-93340 Le Raincy (FR)**

(74) Mandataire: **Des Termes, Monique et al**
**Société Brevatome 25, rue de Ponthieu**
**F-75008 Paris (FR)**

(56) References cited:
**FUSION TECHNOLOGY, PROCEEDINGS OF THE 10TH SYMPOSIUM, vol. 2, Padova (IT), 4-9 septembre 1978 L.J. BAKER:"Some implications of a cellular structure in minimum thickness fusion reactor blankets", pages 661-666**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention se rapporte au domaine des réacteurs de production d'énergie par fusion nucléaire à partir d'un plasma utilisant la réaction deutérium tritium.

On sait que dans de tels réacteurs à fusion on utilise comme source de neutrons un plasma confiné dans une machine, généralement toroïdale, par exemple de type Tokamak. Dans un telle machine, les neutrons émis sont ensuite envoyés sur une zone adjacente appelée couverture, qui comporte à la fois un milieu multiplicateur de neutrons et un milieu "tritigène", c'est-à-dire dans lequel, par réaction de ces mêmes neutrons sur des matériaux contenant du lithium, on engendre le tritium nécessaire à entretenir la réaction de fusion de ce dernier corps avec le deutérium.

De façon plus précise, la présente invention se rapporte à de tels réacteurs à fusion nucléaire utilisant des matériaux tritigènes solides et concerne spécialement la constitution elle-même de la couverture de ce réacteur, lequel par ailleurs peut être d'une constitution quelconque connue en ce qui concerne la partie où l'on entretient le plasma produisant la réaction de fusion proprement dite.

Dans les réacteurs à fusion utilisant un plasma confiné dans une machine de type Tokamak par exemple, la couverture assure trois fonctions essentielles, à savoir:

—la production du tritium nécessaire à la réaction DT, par réaction des neutrons sur des matériaux contenant du lithium (Li) selon les équations de transmutation:

$$^{6}_{3}\text{Li} + ^{1}_{0}\text{n} \rightarrow ^{4}_{2}\text{He} + ^{3}_{1}\text{T}$$

$$^{7}_{3}\text{Li} + ^{1}_{0}\text{n} \rightarrow ^{4}_{2}\text{He} + ^{1}_{0}\text{n} + ^{3}_{1}\text{T}$$

—la récupération de la chaleur produite, à des fins électrogènes ou autres.

—la limitation des fuites neutroniques.

Les principales difficultés recontrées lors des conceptions de couvertures imaginées jusqu'ici découlent des possibilités de combinaison des principaux paramètres suivants:

—la nature des matériaux tritigènes, liquides ou solides;

—la nature du fluide caloporteur et son sens de circulation;

—la nature du matériau de structure;

—la conception de l'interface avec le plasma (première paroi), intégrée ou non à la couverture.

Vis-à-vis des paramètres précédents, la prise en compte des compatibilités chimiques des matériaux entre eux et le bilan de neutrons nécessaires pour obtenir le tritium d'une manière autonome conduisent à ne retenir qu'un nombre limité de solutions.

L'une d'elles couramment envisagée repose sur les options suivantes:

—le matériau tritigène est solide; il est constitué de céramiques de lithium telles que $Li_2O$, $LiAlO_2$, $Li_2SiO_3$, $Li_2TiO_3$ . . . ou éventuellement l'alliage Al—Li, associés avec un multiplicateur de neutrons comme Be, Pb ou Zr ou leurs composés,

—le fluide caloporteur est de l'eau pressurisée ($H_2O$ ou $D_2O$) ou de l'hélium;

—le matériau de gainage et de structure est de l'acier inoxydable.

Cette solution entraîne les astreintes suivantes:

—le pourcentage de matériau de structure doit être aussi faible que possible pour éviter les captures de neutrons;

—la nécessité d'une circulation de gaz neutre à faible pression, par exemple de l'hélium, pour extraire le tritium de la couverture d'une manière continue, ou à intervalles de temps très rapprochés, et le réinjecter dans le plasma.

—le maintien des matériaux tritigènes dans des plages de température données requises pour l'extraction du tritium. Par exemple 500°—850°C pour une céramique $LiAlO_2$ (500°C étant la température minimum d'extraction du tritium, 850°C étant la température maximale de tenue de la céramique),

—des caractéristiques du fluide caloporteur voisines de celles des réacteurs de puissance électrogènes soit pour l'eau une pression de 150 bars et une température de 280°—320°C, et pour l'hélium 50 bars et 250°—500°C.

De nombreuses variantes de couvertures pour réacteurs à fusion ont été envisagées à ce jour.

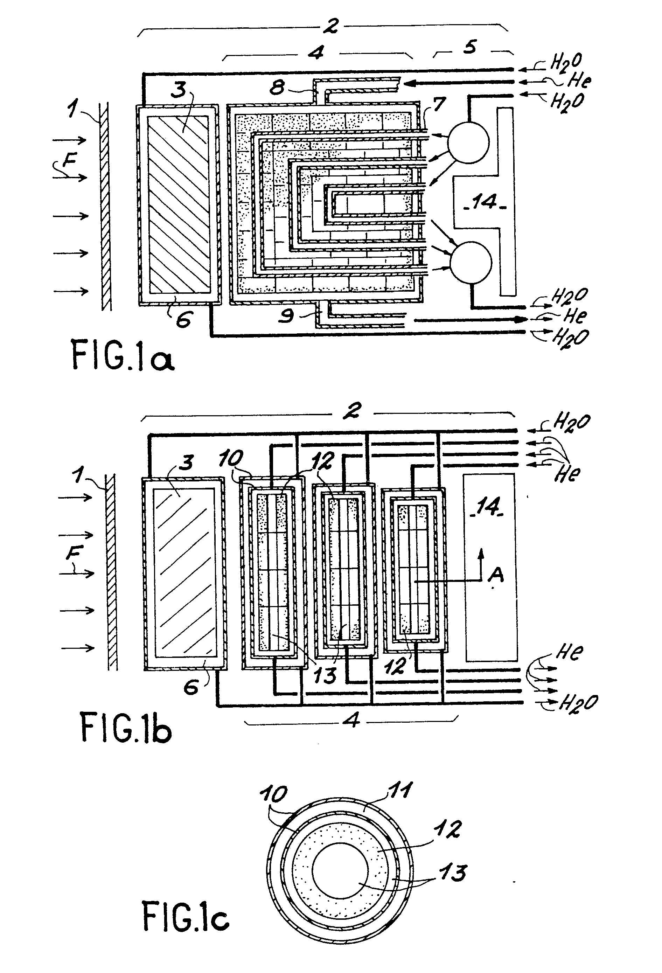

Deux des solutions connues les plus couramment proposées sont schématiquement représentées sur les figures 1a, 1b que l'on décrira plus en détail ci-après.

La fig. 1c représente la coupe selon A de l'une des colonnes cylindriques de la fig. 1b.

Le dispositif producteur de plasma, d'un type quelconque connu et notamment du type Tokamak, de forme toroïdale, ne fait pas partie de l'invention et n'est pas représenté sur la figure. Il serait situé sur les figures 1a et 1b sur la partie gauche du dessin et on a simplement représenté, par des flèches F, le flux de neutrons qui pénètrent dans la couverture.

Une paroi 1 appelée première paroi est soumise à l'action du plasma issu de la machine à confinement (type Tokamak ou autre) engendrant des neutrons dont l'énergie est d'environ 14 MeV. Cette première paroi 1, en acier inoxydable par exemple, sépare complètement la couverture du dispositif et comprend un système de refroidissement ainsi qu'un système de pompage des impuretés non représentés.

Elle arrête la plus grande partie du rayonnement alpha. Les ions ou particules alpha y diffusent également en y déposant environ 20% de l'énergie de fusion engendrée dans le plasma.

La couverture 2 à proprement parler, est constituée au fur et à mesure que l'on s'éloigne de la source de plasma, d'un matériau multiplicateur 3 ayant une épaisseur d'environ 10 cm, d'un milieu tritigène 4 ayant une épaisseur d'environ 30 à 50 cm dans lequel se forme le tritium et d'une protection 5 contre le rayonnement.

Dans le cas de la fig. 1a, le milieu multiplicateur 3 est constitué par du béryllium enfermé dans une enveloppe 6 en acier qui permet d'assurer la circulation d'un réfrigérant.

Dans le cas de la figure 1b, le matériau multiplicateur est prévu en plomb.

A l'arrière du multiplicateur 3, comme représenté sur la figure 1a, est disposé le matériau céramique tritigène 4 qui se présente sous la forme d'un empilement de briques traversé par un réseau de tubes 7 en acier assurant la circulation du réfrigérant ($H_2O$).

Ce matériau céramique tritigène 4 est balayé par un gaz inerte, généralement de l'hélium, chargé d'extraire le tritium formé. Ce gaz, dont seules l'entrée 8 et la sortie 9 dans la masse de céramique sont représentées sur la fig 1a, peut circuler dans celle-ci soit simplement en utilisant sa porosité, soit en empruntant des conduits spéciaux qu'on y a creusés et qui ne sont pas représentés sur la fig. 1a.

Dans le cas des fig. 1b et 1c, les céramiques tritigènes 4 se présentent sous la forme de pastilles annulaires 12 enfermées dans un réseau de tubes 10. Les tubes 10 sont à double paroi permettant dans l'espace 11 ainsi défini, la circulation du réfrigérant ($H_2O$) et contiennent dans leur partie centrale l'empilement des pastilles annulaires 12 balayées par un courant d'hélium 13.

Enfin la couverture 2 se termine par une paroi métallique 14 de protection contre les rayonnements.

D'autres conceptions reposent sur l'utilisation d'empilements de billes ou boulets entre lesquels le fluide caloporteur circule, avec optimisation de la proportion de billes ou de boulets des matériaux multiplicateur et tritigène. Dans cette disposition toutefois, il faut envisage un déplacement permanent ou circulation des boulets, et la structure géométrique torique liée au confinement du type Tokamak n'est pas favorable à une circulation assurée des boulets, circulation nécessaire pour l'extraction du tritium. En outre, les pressions de contact "sphère sur sphère" élevées créent des problèmes d'usure et d'interaction.

Les dispositions précédentes présentent un certain nombre d'inconvénients parmi lesquels on citera les suivants:

1—une difficile utilisation des multiplicateurs de neutrons. En effet:

Si c'est le plomb, comme sa température de fusion est basse, il faut le refroidir très activement d'où une difficulté de récupérer la chaleur à un niveau de température compatible avec un réacteur électrogène. En effet, compte tenu de la décroissance exponentielle de la puissance dégagée dans l'épaisseur de la couverture, la quantité de chaleur dégagée dans cette zone qui est la plus proche du plasma n'est pas négligeable.

Si c'est le béryllium, les neutrons émis par multiplication ont une tendance fâcheuse à être capturés par la première paroi voisine 1 qui comporte un pourcentage élevé de matériau de structure. Pour y remédier, il a parfois été envisagé de disposer une autre couche de béryllium à l'intérieur de la zone tritigène d'où il résulte alors une plus grande complexité.

2—une difficile adaptation à un réacteur de puissance:

Dans la solution de la figure 1a, les contraintes des jeux de montage et des dilatations thermiques différentielles ne sont guère compatibles avec des puissances spécifiques élevées à transmettre entre les blocs de céramiques et les tubes contenant le caloporteur; les coudes compliquent encore le problème. L'extraction du tritium par balayage d'hélium dans l'ensemble du plénum risque d'être inefficace en raison de la compacité du milieu d'où un risque de ne pouvoir assurer le cycle du tritium et son injection dans le plasma.

Dans la solution de la figure 1b, le dimensionnement des parois 1, 6, 10 pour la tenue à la pression du caloporteur conduit à un pourcentage de matériau de structure en acier inoxydable de l'ordre de 20 à 30%, ce qui est préjudiciable à la production de tritium.

Dans les deux solutions, le matériau tritigène 4 étant généralement sous forme de céramique, il a une mauvaise conductibilité thermique, ce qui conduit, dans le cas de la Fig. 1a, à resserrer le pas du réseau des tubes du fluide caloporteur par diminution du diamètre de ces tubes, par exemple à choisir au voisinage du plasma un pas de l'ordre de 30 mm, d'où une grande complexité de l'ensemble.

La présente invention a précisément pour objet un dispositif de couverture de réacteur à fusion utilisant la réaction deutérium tritium à matériau tritigène solide qui permet de pallier la plupart des défauts des solutions antérieurement envisagées précédemment et ce d'une façon particulièrement simple et efficace.

Ce dispositif de couverture de réacteur à fusion, comporte au voisinage d'un plasma générateur de neutrons, un milieu multiplicateur de neutrons associé à un milieu tritigène refroidis par circulation d'un fluide réfrigérant et une circulation d'un gaz neutre d'entraînement et d'extraction du tritium engendré dans le milieu tritigène pour alimenter le plasma, ce caractérise en ce que l'association des milieux multiplicateur et tritigène est réalisée par des empilements alternés de pastilles de chacun de ces deux milieux, maintenues en contact intime sur toutes leurs surfaces latérales.

Le fait de composer la masse réagissante aux neutrons émis par le flux de plasma à l'aide d'un empilement alterné de pastilles alternativement multiplicatrices de neutrons et tritigènes, permet de résoudre facilement les problèmes thermiques, neutroniques, ainsi que de réfrigération et d'extraction du tritium formé, qui découlait, dans les solutions antérieures, de la séparation dans l'espace des milieux multiplicateurs et tritigènes ainsi que du caractère massif de chacun d'entre eux. De plus, la mise en oeuvre de l'invention permet, en choisissant convenablement les épaisseurs respectives des pastilles de matériau multiplicateur et de matériau tritigène, en fonction du lieu où elles se situent dans la couverture et donc du flux de neutrons qu'elles reçoivent, de construire pratiquement sur mesure un milieu multiplicateur et tritigène optimisé.

Dans une réalisation spécialement intéressante du dispositif objet de l'invention, chaque empilement forme un module unitaire constitué de pastilles cylindriques percées d'un orifice central et empilées dans un boîtier annulaire de diamètre interne supérieur au diamètre externe des pastilles et comportant de ce fait une chambre latérale de circulation d'hélium et une canalisation centrale également cylindrique autour de laquelle sont enfilées les pastilles et parcourue par le fluide réfrigérant, le serrage des pastilles assurant le contact intime de leurs faces latérales étant obtenu sous l'effet de la compression d'un système élastique prenant appui sur les fonds du boîtier annulaire.

Dans des réalisations conformes à ce mode de mise en oeuvre, le refroidissement de l'ensemble par circulation du fluide réfrigérant dans une canalisation centrale est assuré avec une très bonne efficacité et le balayage de la matière tritigène par le gaz neutre d'entraînement est également très satisfaisant. A cet effet d'ailleurs, on peut prévoir des centreurs sur la périphérie interne de la surface des pastilles qui permettent de maintenir une lame de gaz neutre entre l'orifice cylindrique central des pastilles et la canalisation cylindrique centrale sur laquelle celles-ci sont enfilées.

Selon une disposition avantageuse du mode de mise en oeuvre précédent, le dispositif de couverture de réacteur à fusion comporte un assemblage de modules unitaires rassemblées dans une enceinte unique, lesdits assemblages ayant des sections droites croissantes en fonction de la distance qui les sépare du plasma générateur de neutrons.

On conçoit en effet que la densité de neutrons reçue par la couverture variant d'un point à l'autre de son épaisseur, il est avantageux de disposer des modules unitaires de plus faible section, donc en plus grand nombre à l'endroit où ce flux de neutrons est le plus intense, les conditions de refroidissement restant égales par ailleurs d'un module à l'autre.

Selon une autre variante du dispositif de couverture de réacteur à fusion selon l'invention, ce dernier comprend dans une enceinte unique parcourue par un gaz neutre de balayage un assemblage de modules unitaires dont chacun comporte un empilement de pastilles cylindriques percées d'un orifice cylindrique central par l'intermédiaire duquel elles sont enfilées conjointement sur une canalisation centrale également cylindrique et parcourue par le fluide réfrigérant lesdits assemblages ayant des sections droites croissantes en fonction de la distance qui les sépare du plasma générateur de neutrons.

Dans ce mode de mise en oeuvre, simplifié en quelque sorte par rapport au précédent, les modules unitaires ne sont plus eux-mêmes enfermés dans un boîtier annulaire, mais simplement juxtaposés dans une enceinte générale qui les rassemble tous et qui est parcourue par un gaz neutre de balayage.

Selon un autre mode de mise en oeuvre de la présente invention, la couverture de réacteur à fusion comprend dans une enceinte unique parcourue par un gaz réfrigérant, un assemblage de modules unitaires dont chacun comporte un empilement de pastilles pleines montées adjacentes dans un boîtier cylindrique et munies de centreurs délimitant entre le boîtier et les pastilles un espace pour la circulation du gaz neutre d'entraînement du tritium, lesdits modules étant alimentés chacun et interconnectés entre eux par des conduites de gaz neutre d'entraînement du tritium et le serrage des pastilles assurant le contact intime de leurs faces latérales étant obtenu sous l'effet de la compression d'un système élastique prenant appui sur les fonds des boîtiers.

Dans ce mode de mise en oeuvre, la différence essentielle par rapport aux réalisations précédentes, consiste dans le fait que les pastilles rassemblées en contact intime par leurs faces latérales, ne sont pas pourvues d'un orifice central et que la circulation de balayage de gaz neutre s'effectue à la périphérie externe des pastilles dans un espace approprié obtenu à l'aide de centreurs fixant la position des pastilles dans leurs boîtiers respectifs. Dans ce mode de mise en oeuvre, le gaz de balayage, par exemple de l'hélium, circule d'un boîtier à l'autre à l'aide d'un système d'interconnexion des boîtiers et l'ensemble est contenu dans une enceinte unique dont l'axe de révolution est parallèle au flux de neutrons reçu en provenance du plasma.

Enfin, selon une disposition intéressante du dispositif de l'invention, on perfectionne la qualité de l'empilement des pastilles cylindriques par le fait qu'elles comportent alternativement des épaulements et des alésages sur l'un des leurs bords afin de permettre leur meilleur emboîtement intime les unes dans les autres.

De toute façon, la présente invention sera mieux comprise en se référant à la description qui suit de plusieurs exemples de mise en oeuvre donnés surtout à titre illustratif et non limitatif. Cette description sera faite en se référant aux figures 2 à 5 ci-jointes sur lesquelles:

—la fig. 2a est une vue schématique du premier mode de réalisation dans lequel les empilements de pastilles sont situés dans un boîtier annulaire;

—la fig. 2b est une coupe de la fig. 2a selon la section AA qui montre les centreurs des pastilles;

—la fig. 2c est une coupe selon l'axe du boîtier de la fig. 2a montrant le système d'épaulements et d'alésages permettant d'assurer l'empilement correct des pastilles consécutives et la fig. 2d est une vue en perspective montrant deux pastilles adjacentes écartées et permettant de mieux comprendre leur fixation l'une sur l'autre;

—la fig. 3 montre un exemple de réalisation du dispositif de l'invention dans lequel chacun des empilements muni de son boîtier annulaire est enfermé dans une enceinte unique;

—la fig. 4 montre une variante du dispositif de la fig. 3 dans lequel les empilements des pastilles ne sont pas insérés individuellement dans des boîtiers annulaires;

—la fig. 5 montre enfin un mode de réalisation particulier dans lequel les pastilles ne comportent pas d'orifice central et sont assemblées dans une enceinte unique sous forme de modules unitaires chacun dans un boîtier, les différents boîtiers étant adjacents les uns aux autres.

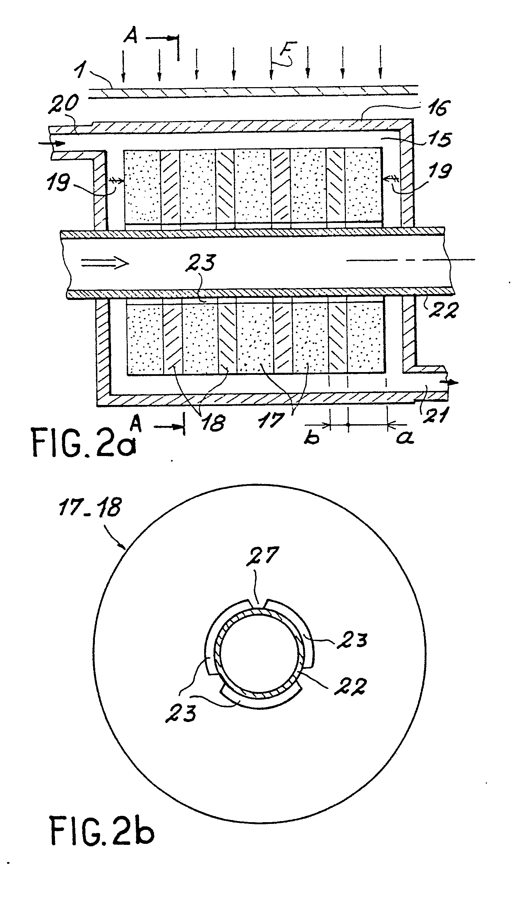

La figure 2a représente en coupe un élément de la couverture tritigène soumis à l'action d'un plasma (flux de neutrons F) et séparé de celui-ci par la première paroi 1 en acier constituant l'interface de cette couverture avec le plasma.

A l'intérieur d'un espace annulaire 15 défini par une paroi circulaire en acier 16 et un tube central en acier 22 est disposé, coaxialement au tube 22, un empilement de rondelles ou de pastilles annulaires de matériau multiplicateur 17 et de matériau céramique tritigène 18. Ces pastilles 17 et 18 sont en contact intime, c'est-à-dire sans interposition de matériau de structure et leurs faces sont maintenues les unes sur les autres à l'aide de systèmes à ressort 19. Ces ressorts 19 permettent, lors du fonctionnement, l'expansion des pastilles. Cette expansion est due aux dilatations différentielles, aux variations de volume sous rayonnement et au dégagement gazeux. Une autre raison du maintien des différentes surfaces en contact réside dans la nécessité d'assurer entre les pastilles une bonne conductibilité thermique.

Une circulation de gaz (hélium) entre en 20 et est assurée dans l'espace annulaire 15. Cette circulation permet d'effectuer un balayage des pastilles 17, 18 et, de ce fait, de se charger du tritium dégagé. L'hélium vecteur de tritium est évacué par la conduite 21 pour être dirigé sur une installation, non représentée, d'extraction et de recyclage dans le plasma. Le tube 22 assure la circulation du réfrigérant. Dans le cas présent, celui-ci est constitué par de l'$H_2O$, mais il est possible d'envisager un refroidissement par $D_2O$ ou même par gaz du type hélium.

L'eau, à une pression d'environ 150 bars, pénètre dans le tube 22 à une température d'environ 280°C et sort à une température d'environ 320°C. Ce caloporteur est dirigé en aval vers une unité de production de vapeur utilisée, à titre d'exemple, comme source électrogène. Cette unité non représentée est d'un type bien connu dans les chaudières électronucléaires actuelles. Dans l'empilement tel que représenté sur la figure 2a, la proportion en volume du multiplicateur est défini par le rapport a/b des épaisseurs respectives des pastilles 17 et 18. L'optimisation par calculs neutroniques permet de situer cette proportion entre 5 et 10. C'est ainsi que, dans cet exemple, les pastilles 17, représentent une proportion de 80% en Béryllium de l'empilement.

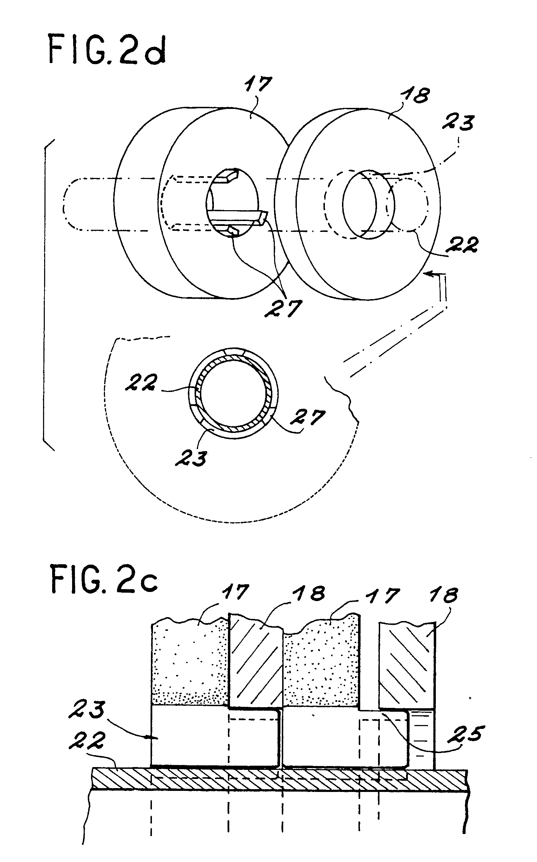

Comme représenté sur la figure 2b qui est une coupe selon AA d'une pastille, qu'elle soit constituée de matériau multiplicateur ou de matériau tritigène, des centreurs 27 sont prévus sur la couronne intérieure de la rondelle afin de ménager une série d'espaces 23. Ces espaces 23 permettent l'établissement d'une lame d'hélium agissant comme conducteur de calories entre les pastilles 17, 18 et le tube 22 de circulation du réfrigérant. Cette lame d'hélium permet d'établir l'écart de température nécessaire au maintien des pastilles 18 de matériau tritigène dans la gamme de température désirée. C'est ainsi que, pour une température de 800°C d'un point médian de la pastille 18, on relève une température d'environ 700°C sur les surfaces périphérique et centrale de la pastille au contact de la lame d'hélium. Cette lame, au contact avec le tube 22 véhiculant de l'eau sous pression, cède à l'eau ses calories de façon à permettre une élévation moyenne de 40°C de l'eau pénétrant dans le tube 22 à environ 280°C. De ce fait et compte tenu des pertes calorifiques dans les matériaux de structure de l'enceinte, on peut établir que la température de cette lame est comprise en fonction du site entre 300°C et 600°C. Les centreurs 27 représentés sur la figure 2b faisant partie intégrante des pastilles 17 ou 18 peuvent être remplacés par des centreurs pratiqués sur la surface externe du tube 22 ou par des profilés disposés entre cette surface et la surface des pastilles, comme c'est le cas des centreurs 24 sur la Fig. 2d.

Ces centreurs ou profilés doivent permettre un dimensionnement de l'espace 23 compris entre 0,1 et 5 millimètres.

La fig. 2c représente une variante de montage de l'empilement. Dans cette réalisation, les pastilles 17 possèdent dans leur partie centrale un épaulement ou redan 25. Les pastilles 18 possèdent un trou central dont le diamètre, supérieur au diamètre du trou central des pastilles 17, correspond au diamètre défini par l'épaulement 25. De cette manière, les pastilles 18 conservent un très bon alignement. Il est évident que l'épaulement 25 peut être usiné près de la périphérie des pastilles 17, la fonction de centrage étant de même assurée.

Enfin, les pastilles 17 et 18 représentées ici avec des formes annulaires peuvent être de conception différente; elles peuvent, notamment, présenter des sections carrées, rectangulaires ou hexagonales.

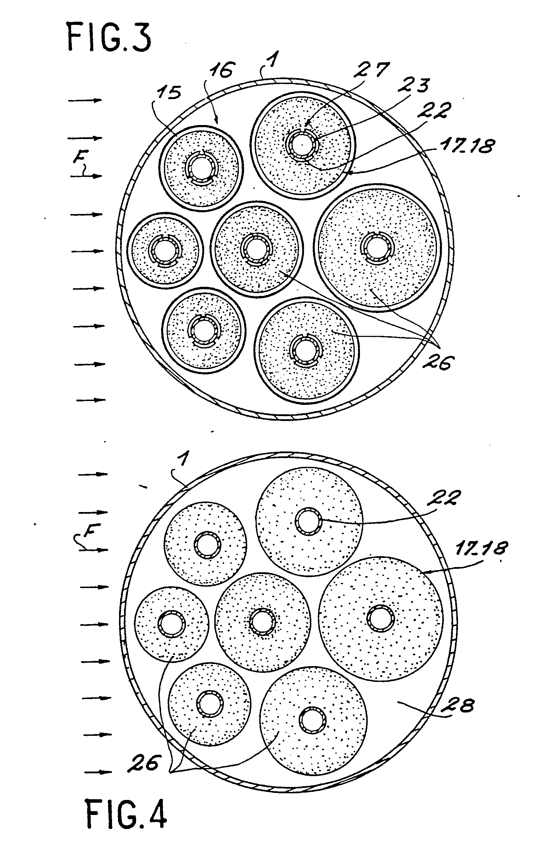

La fig. 3 représente en coupe une disposition dite en grappe d'un ensemble d'empilements définissant une portion de couverture.

Cette coupe est représentée selon une disposition des axes des empilements parallèles à la direction toroïdale.

Dans l'enceinte cylindrique circulaire définie par la première paroi 1, un ensemble d'empilements 26 identiques à celui représenté sur la figure 2a est disposé selon une configuration autorisant l'augmentation de la superficie de la section droite des pastilles en fonction de leur éloignement de plasma supposé venant du côté gauche de la fig. 3. Cette augmentation de superficie tend à compenser la baisse de puissance spécifique de l'empilement le plus éloigné et qui est de ce fait soumis à des énergies de neutrons plus faibles.

Dans cette configuration de la fig. 3, les rondelles 17 ou 18 disposées concentriquement sur les tubes 22 de circulation d'eau et espacées de ceux-ci par des centreurs 27 définissant l'espace de lame d'hélium 23, sont soumises au balayage d'hélium circulant dans les espaces 15 et 23. L'ensemble des tubes 22 est réuni par ses tubulures d'entrée et de sortie de manière à constituer un circuit de refroidissement. De même, l'ensemble des espaces 15 est raccordé pour constituer le circuit de balayage par hélium. Un circuit d'eau non représenté permet d'assurer le refroidissement de la première paroi 1.

Dans une variante de réalisation du mode de mise en oeuvre de la fig. 3, la paroi de l'enceinte 1 se limite à la seule partie soumise au plasma et adopte une forme toroïdale d'une certaine longueur, compatible avec celle des empilements 26.

La fig. 4 représente une variante de la disposition dite en grappe précédente.

Dans cette variante, toutefois, les empilements 26 ne sont pas individuellement enfermés dans une enveloppe annulaire définissant l'espace 15 de circulation d'hélium. La circulation du réfrigérant qu'il s'agisse d'$H_2O$ ou de $D_2O$ est toujours assurée par les tubes centraux 22, mais le balayage d'hélium est commun à l'ensemble des empilements ou modules unitaires 26 et a lieu dans l'espace 28 dans lequel baignent ceux-ci.

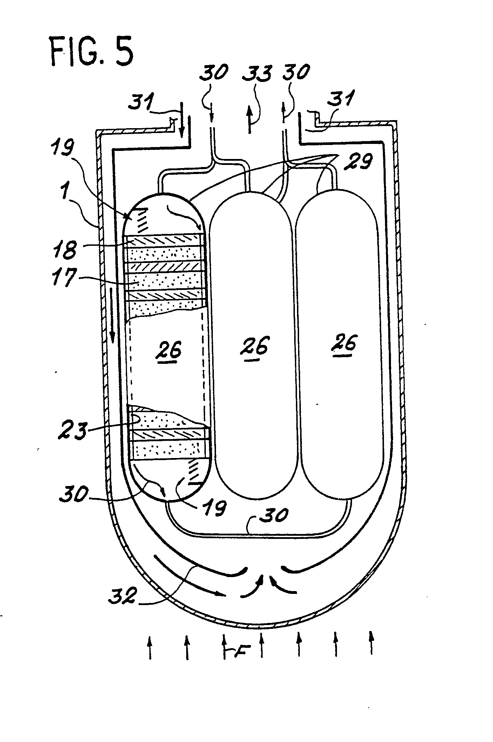

Dans la réalisation de la fig. 5, les empilements ont un axe parallèle à la direction radiale du plasma, les pastilles 17 et 18 sont empilées dans des tubes 29 dont le diamètre interne correspond au diamètre externe des pastilles 17—18; ce diamètre externe inclut des centreurs non représentés afin de ménager un espace identique à l'espace 23 précédent (Fig. 2, 3) délimitant une lame de gaz de balayage, ici de l'hélium. De même, comme sur la fig. 2a, les ressorts 19 assurent le maintien de l'empilement de pastilles 17, 18.

Des conduits 30 réunissant les tubes 29 entre eux assurent la circulation de l'hélium de balayage des pastilles tritigènes. Dans cette disposition, le refroidissement de l'ensemble s'effectue à l'aide d'une circulation d'hélium pénétrant par la zone latérale 31 et extrayant les calories de l'ensemble des empilements 26 et des matériaux de structure tels que l'enceinte 1 et les tubes 29. Des tranquilliseurs ou baffles 32 sont disposés dans l'enceinte 1 afin d'effectuer un refroidissement optimisé de l'ensemble des empilements 26. Le gaz hélium de refroidissement sort selon le trajet de la flèche 33 après avoir refroidi les modules unitaires ou empilements 26.

La structure du dispositif selon la présente invention présente de multiples avantages. C'est ainsi que la juxtaposition du multiplicateur et du matériau tritigène sous forme divisée permet de:
—minimiser le pourcentage de matériau de structure dans la couverture,
—éviter la dégradation du spectre neutronique émis par le béryllium qui est particulièrement fragile, c'est-à-dire à forte section efficace de capture par les matériaux de structure, en limitant la capture des neutrons avant leur réaction sur le matériau tritigène;
—permettre au béryllium de jouer un rôle de modérateur qui est particulièrement utile à l'arrière de la couverture.

De plus, le béryllium métal ayant une conductibilité thermique bien meilleure que les céramiques (d'un facteur voisin de 10), joue un rôle de pont thermique entre le matériau tritigène et le fluide caloporteur, ce qui permet:
—de multiplier la surface de contact entre la source principale de chaleur et le tube de circulation du réfrigérant;
—de réduire le gradient thermique selon le rayon de la pastille de céramique, d'où une plus grande facilité de rester dans la plage de température requise pour extraire le tritium et la possibilité d'utiliser des pastilles de céramiques de plus grand diamètre;
—de réduire le gradient thermique dans la direction du flux de neutrons pour la disposition de la fig. 4, le gradient dans le béryllium entre la face de la pastille située le plus près du plasma et la face opposée étant très faible.

En outre, l'empilement de pastilles sur un tube intérieur contenant le caloporteur permet:
—de minimiser le gainage du fluide caloporteur car le fluide à la plus forte pression est contenu dans une enveloppe de plus petit diamètre;
—de supporter l'empilement de pastilles, les tubes pouvant être liés entre eux au moyen de grilles reportant les efforts dûs à la pesanteur ou aux sollicitations sismiques sur l'enveloppe extérieure.

Dans les descriptions précédentes, on a présenté le matériau multiplicateur comme Pb ou Be sous forme de métal pur; pour des raisons métallurgiques, ces matériaux de base peuvent être des alliages ou des composés connus tels que PbO, BeO, PbBi, $Zr_5Pb_3$, HZr, Zr . . .

De même, dans les fig. 3, 4 et 5, on a montré des dispositions d'orientation des axes des empilements de pastilles, par rapport à l'axe du tore fournissant le plasma, dans le sens toroïdal et le sens radial. Une autre possibilité, bien que n'apparaissant pas comme une solution optimale, serait une disposition dans le sens "poloïdal", c'est-à-dire que, dans ce cas, les axes des empilements de pastilles seraient tangents aux petits cercles du plasma.

**Revendications**

1. Dispositif de couverture de réacteur à fusion utilisant la réaction D, T à matériaux tritigènes solides comportant au voisinage d'un plasma générateur de neutrons (F), un milieu (3) multiplicateur de neutrons associé à un milieu tritigène (4) refroidis par circulation d'un fluide réfrigérant et une circulation (8, 9) d'un gaz neutre d'entraînement et d'extraction du tritium engendré dans le milieu tritigène pour alimenter le plasma, caractérisé en ce que l'association des milieux multiplicateurs de neutrons et tritigène est réalisée par des empilements alternés de pastilles (17, 18) de chacun de ces deux milieux, maintenues en contact intime sur toutes leurs surfaces latérales.

2. Dispositif de couverture de réacteur à fusion selon la revendication 1, caractérisé en ce que chaque empilement forme un module unitaire (26) constitué de pastilles cylindriques (17, 18) percées d'un orifice cylindrique central et empilées dans un boîtier annulaire (16) de diamètre interne supérieur au diamètre externe des pastilles et comportant de ce fait une chambre latérale (15) de circulation d'hélium et une chambre latérale (15) de circulation d'hélium et une canalisation centrale (22) également cylindrique autour de laquelle sont enfilées les pastilles et parcourue par le fluide réfrigérant, le serrage des pastilles assurant le contact intime de leurs faces latérales étant obtenu sous l'effet de la compression d'un système élastique (19) prenant appui sur les fonds du boîtier annulaire.

3. Dispositif de couverture de réacteur à fusion selon la revendication 2, caractérisé en ce qu'il comporte un assemblage de modules unitaires (26) rassemblés dans une enceinte unique (1), lesdits assemblages ayant des sections droites croissantes en fonction de la distance qui les sépare du plasma générateur de neutrons (Fig. 3 et 4).

4. Dispositif de couverture de réacteur à fusion selon la revendication 1, caractérisé en ce qu'il comprend, dans une enceinte unique (1) parcourue par un gaz neutre de balayage un assemblage de modules unitaires (26) dont chacun comporte un empilement de pastilles cylindriques (17, 18) percées d'un orifice cylindrique central par l'intermédiaire duquel elles sont enfilées conjointement sur une canalisation centrale (22) également cylindrique et parcourue par le fluide réfrigérant lesdits assemblages (26) ayant des sections droites croissantes en fonction de la distance qui les sépare du plasma générateur de neutrons (Fig. 3 et 4).

5. Dispositif de couverture de réacteur à fusion selon la revendication 1, caractérisé en ce qu'il comprend, dans une enceinte unique (1) parcourue par un gaz réfrigérant un assemblage de modules unitaires (26) dont chacun comporte, un empilement de pastilles pleines montées adjacentes dans un boîtier cylindrique (29) et munies et centreurs délimitant entre le boîtier et les pastilles un espace (23) pour la circulation du gaz neutre d'entraînement du tritium, lesdits modules (26) étant alimentés chacun et interconnectés entre eux par des conduites (30) de gaz neutre d'entraînement du tritium et le serrage des pastilles assurant le contact intime de leurs faces latérales étant obtenu sous l'effet de la compression d'un système élastique (19) prenant appui sur les fonds des boîtiers (Fig. 5).

6. Dispositif selon l'une quelconque des revendications 1 à 5 précédentes, caractérisé en ce que l'empilement des pastilles cylindriques (17, 18) est assuré par le fait qu'elles comportent alternati

vement des épaulements (25), et des alésages sur l'un de leurs bords permettant leur emboîtement intime (Fig. 2c).

7. Dispositif selon l'une quelconque des revendications 1 à 4 précédentes, caractérisé en ce que le centrage des pastilles (17, 18) sur la canalisation centrale (22) est réalisé à l'aide de centreurs faisant partie intégrante des pastilles (24, Fig. 2b) ou rapportés (27, Fig. 2d) placés entre les pastilles et la canalisation, de façon à ménager une zone (23) de maintien d'une lame de gaz neutre.

**Patentansprüche**

1. Tritium brütendes Fest-Blanket eines Deuterium-Tritium-Fusionsreaktors mit einem einem Plasmaneutronengenerator (F) benachbarten Neutronen multiplizierenden Medium (3), das einem Tritium erzeugenden, durch eine Kühlfluidströmung gekühlten Medium zugeordnet ist, und einer neutralen Gasströmung (8, 9) zum Mitführen und Abführen des in dem Tritium erzeugenden Medium erzeugten Tritiums, um das Plasma zu versorgen, dadurch gekennzeichnet, daß die Zuordnung des Neutronen multiplizierenden und des Tritium erzeugenden Bereichs durch abwechselnde Schichtung von Plättchen (17, 18) von jedem dieser zwei Medien hergestellt ist, die in enger Berührung über ihre gesamten Seitenflächen gehalten sind.

2. Blanket eines Fusionsreaktors nach Anspruch 1, dadurch gekennzeichnet, daß jede Schichtung ein Einheitsmodul (26) bildet, der von zylindrischen Plättchen (17, 18) gebildet ist, die mit einer zylindrischen Mittelöffnung durchbohrt und in einem ringförmigen Gehäuse (16), dessen Innendurchmesser größer als der Außendurchmesser der Plättchen ist, geschichtet sind, und hierfür eine Seitenkammer (15) für die Heliumströmung und ein ebenfalls zylindrisches Mittelrohr (22) aufweist, um welches herum die Plättchen aufgereiht sind und das von dem Kühlfluid durchströmt wird, wobei das Zusammendrücken der Plättchen, welches die enge Berührung ihrer Seitenfläche sicherstellt, durch die Wirkung des Zusammendrückens eines elastischen Systems (19) erhalten wird, welches sich auf Böden der ringförmigen Gehäuse abstützt.

3. Blanket für einen Fusionsreaktor nach Anspruch 2, dadurch gekennzeichnet, daß es eine Vereinigung von Einheitsmodulen (26) umfaßt, die in einer einzigen Kammer (1) zusammengestellt sind, wobei die genannten Vereinigungen wachsende Querschnitte als Funktion des Abstandes aufweisen, der sie von dem Plasmaneutronengenerator trennt (Figur 3 und 4).

4. Blanket für einen Fusionsreaktor nach Anspruch 1, dadurch gekennzeichnet, daß es in einer einzigen, von einem neutralen Reinigungsgas durchströmten Kammer (1) eine Vereinigung von Einheitsmodulen (26) aufweist, von denen jeder eine Schichtung von zylindrischen Plättchen (17, 18) umfaßt, die mit einem zylindrischen Mittelloch durchbohrt sind, mit dem sie gemeinsam auf ein ebenfalls zylindrisches und von dem Kühlfluid durchströmtes Mittelrohr (22) aufgereiht sind, wobei die Vereinigungen (26) wachsende Querschnitte als Funktion des Abstands aufweisen, der sie von dem Plasmaneutronengenerator trennt (Figur 3 und 4).

5. Blanket für einen Fusionsreaktor nach Anspruch 1, dadurch gekennzeichnet, daß es in einer einzigen, von einem Kühlgas durchströmten Kammer (1) eine Vereinigung von Einheitsmodulen (26) aufweist, von denen jeder eine Schichtung von vollen Plättchen umfaßt, die in einem zylindrischen Gehäuse (29) benachbart angeordnet sind, und die mit Zentrierungsmitteln versehen sind, welche zwsichen dem Gehäuse und den Plättchen einen Raum (23) für die Durchströmung des neutralen Gases zum Abführen des Tritiums begrenzen, wobei die gennanten Module (26) jeweils über Leitungen (30) für das neutrale Gas zum Abführen des Tritiums versorgt und über diese miteinander verbunden sind und das Zusammendrücken der Plättchen, welches die enge Berührung ihrer Seitenflächen sicherstellt, durch die Wirkung des Zusammendrückens eines elastischen Systems (19) erhalten wird, welches sich auf dem Boden der Gehäuse abstützt (Figur 5).

6. Blanket nach irgendeinem der vorhergehenden Ansprüche 1—5, dadurch gekennzeichnet, daß die Schichtung der zylindrischen Plättchen (17, 18) dadurch sichergestellt ist, daß sie abwechselnd Schultern (25) und Bohrungen an einem ihrer Ränder aufweisen, die ihr enges Ineinanderschieben ermöglichen (Figur 2c).

7. Blanket nach irgendeinem der vorhergehenden Ansprüche 1—4, dadurch gekennzeichnet, daß die Zentrierung der Plättchen (17, 18) auf dem Mittelrohr (22) mit Hilfe von Zentriermitteln erfolgt, die einstückiger (24, Figur 2b) oder angebrachter (27, Figur 2d) Teil der Plättchen sind und zwischen den Plättchen und dem Durchlaß derart angeordnet sind, daß ein Bereich (23) zum Aufrechterhalten einer neutralen Gasschicht vorgesehen ist.

**Claims**

1. Fusion reactor blanket device using the D, T reaction with solid tritigenic materials comprising in the vicinity of a neutron generator plasma (F), a neutron multiplicator medium (3) associated with a tritigenic medium (4) cooled by the circulation of a cooling fluid and a circulation (8, 9) of a neutral gas for the entrainment and extraction of the tritium produced in the tritigenic medium for supplying the plasma, characterized in that the association of the neutron multiplicator and tritigenic media is realized by alternate piles of pellets (17, 18) of each of these two media, which are kept in intimate contact over their entire lateral surfaces.

2. Fusion reactor blanket device according to claim 1, characterized in that each pile forms a unitary module (26) constituted by cylindrical pellets (17, 18) having a central cylindrical orifice and stacked in an annular box (16) having an internal diameter larger than the external diameter of the pellets and consequently having a lateral helium circulation chamber (15) and an also cylindrical central pipe (22) around which are threaded the pellets and which is traversed by the cooling fluid, the fixing of the pellets ensuring the intimate contact of their lateral faces being obtained under the effect of the compression of an elastic system (18) bearing on the bases of the annular box.

3. Fusion reactor blanket device according to claim 2, characterized in that it comprises an assembly of unitary modules (26) brought together in a single enclosure (1), said assemblies having increasing cross-sections as a function of the distance separating them from the neutron generating plasma (Figs. 3 and 4).

4. Fusion reactor blanket device according to claim 1, characterized in that it comprises, in a single enclosure (1) traversed by a neutral scavenging gas, an assembly of unitary modules (26), whereof each has a pile of cylindrical pellets (17, 18) with a central cylindrical orifice, via which they are jointly threaded onto an also cylindrical central pipe (22) and traversed by the cooling fluid, said assemblies (26) having increasing cross-sections as a function of the distance separating them from the neutron generator plasma (Figs. 3 and 4).

5. Fusion reactor blanket device according to claim 1, characterized in that it comprises, in a single enclosure (1) traversed by a cooling gas, an assembly of unitary modules (26), whereof each comprises a pile of solid pellets arranged adjacently in a cylindrical box (29) and provided with centring devices which define, between the box and the pellets, a space (23) for the circulation of the neutral tritium entrainment gas, said modules (26) being in each case supplied and interconnected with one another by tritium entrainment neutral gas pipes (30) and the fixing of the pellets ensuring the intimate contact of their lateral faces being obtained under the action of a compression of an elastic system (19) bearing on the bases of the boxes (Fig. 5).

6. Device according to claim 1, characterized in that the pile of cylindrical pellets (17, 18) is ensured by the fact that they alternately comprise shoulders (25) and bores on one of their edges permitting their intimate fitting into one another (Fig. 2c).

7. Device according to claim 1, characterized in that the centring of pellets (17, 18) on the central pipe (22) is brought about with the aid of centring devices forming an integral part of the pellets (24, Fig. 2b) or joined thereto (27, Fig. 2d) placed between the pellets and the pipe, so as to provide a neutral gas tongue maintaining zone (23).

0 128 092

FIG.1a

FIG.1b

FIG.1c

1

FIG. 2a

FIG. 2b

## FIG. 2d

## FIG. 2c

# FIG.3

# FIG.4

FIG. 5